# EUROPÄISCHE PATENTSCHRIFT

(11) **EP 2 649 651 B1**
(45) Veröffentlichungstag und Bekanntmachung des Hinweises auf die Patenterteilung: **02.11.2016**
(21) Anmeldenummer: 12709496.9
(22) Anmeldetag: 16.02.2012
(51) Int. Cl.: H01L 31/048, F24J 2/52

(54) **ANORDNUNG AUS PHOTOVOLTAIK-MODULEN**
ARRANGEMENT OF PHOTOVOLTAIC MODULES
AGENCEMENT DE MODULES PHOTOVOLTAÏQUES

(30) Priorität: 07.03.2011 AT 3042011
(43) Veröffentlichungstag der Anmeldung: 16.10.2013
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2012/000030
(87) Internationale Veröffentlichungsnummer: WO 2012/119162

(56) Entgegenhaltungen:
- WO-A1-2008/108909
- DE-A1- 10 240 939
- DE-A1-102007 056 600
- DE-T2- 69 431 140

## Beschreibung

Die Erfindung betrifft eine Anordnung von Photovoltaik-Modulen an Gebäuden, insbesondere im Dachbereich von Gebäuden mit den Merkmalen des einleitenden Teils von Anspruch 1 (WO 2008/108909 A).

Bislang sind Photovoltaik-Module an der Außenseite von Dacheindeckungen angebracht worden. Dies ist nicht nur eine aufwändige und mühsame Arbeit, sondern erfordert auch besondere Maßnahmen, da die Photovoltaik-Module die Abmessungen von 90 x 160 bis 180 cm haben können.

Die WO 2008/108909 A zeigt eine Anordnung von Photovoltaik-Modulen im Dachbereich von Gebäuden, wobei an Längsrändern der Photovoltaik-Module Aussteifungen vorgesehen sind, über welche die Photovoltaik-Module an einer Unterkonstruktion (90) befestigt sind. Die Photovoltaik-Module werden so auf einem Dach mit Dacheindeckung montiert, so dass sie selbst keine Dacheindeckung bilden.

Der Erfindung liegt die Aufgabe zugrunde, Photovoltaik-Module so weiterzubilden, dass sie unmittelbar eine Dacheindeckung bilden können und besondere Maßnahmen zur Abstützung derselben entbehrlich sind.

Gelöst wird diese Aufgabe erfindungsgemäß mit der Anordnung, welche die Merkmale von Anspruch 1 aufweist.

Bevorzugte und vorteilhafte Ausgestaltungen der Erfindung sind Gegenstand der Unteransprüche.

Da die Photovoltaik-Module bei der erfindungsgemäßen Anordnung als Aussteifungen integrierte Längsabstützungen haben, können sie unmittelbar als Dacheindeckungselemente verwendet werden, wobei auch eine Hinterlüftung der Dacheindeckung möglich ist.

Als Aussteifungen sind beispielsweise an beiden Längsrändern der Photovoltaik-Module angeordnete Winkel vorgesehen, wobei jeweils ein Schenkel der Winkel parallel zur Ebene der Photovoltaik-Module angeordnet ist und der jeweils zweite Schenkel vom Photovoltaik-Modul im Wesentlichen im rechten Winkel absteht.

Bei der erfindungsgemäßen Anordnung können die erfindungsgemäß ausgebildeten Photovoltaik-Module an einer Unterkonstruktion einfach befestigt werden, indem die Winkel der Aussteifung herangezogen werden.

Die Erfindung sieht vor, dass die Photovoltaik-Module über ihre Winkel an längslaufenden Rinnen befestigt werden. Zum Befestigen können übliche Befestigungsmittel verwendet werden, wobei durch Öffnungen in den Winkeln und in den Schenkeln der Rinnen greifende Befestigungsstifte, Stäbe oder Stangen bevorzugt sind.

Bei der erfindungsgemäßen Anordnung ist auch vorgesehen, dass die Photovoltaik-Module mit ihren Querrändern einander überlappend (wie Schindeln oder Dachziegel) angeordnet sind.

Zwischen den Längsrändern von Reihen von Photovoltaik-Modulen, die einander benachbart sind, liegt ein Abstand vor, so dass die Rinnen, an welche die Photovoltaik-Module über ihre Längsabstützungen befestigt sind, gleichzeitig als Rinnen zum Ableiten von Niederschlags- oder Schmelzwasser dienen können.

Weitere Einzelheiten und Merkmale der Erfindung ergeben sich aus der nachstehenden Beschreibung eines Ausführungsbeispiels anhand der Zeichnungen. Es zeigt:
- Fig. 1: in Seitenansicht schematisiert eine erfindungsgemäße Anordnung und
- Fig. 2: schematisiert eine Einzelheit der erfindungsgemäßen Anordnung im Querschnitt.

Die erfindungsgemäße Anordnung 1 weist mehrere einander dachschindelartig überlappende Photovoltaik-Module 3 auf, die in mehreren Reihen, die sich im Dach von oben nach unten erstrecken, angeordnet sind. Jedes Photovoltaik-Modul 3 besitzt an seiner unteren Seite im Bereich seiner Längsränder 5 zwei an ihm befestigte Profilstäbe, z.B. Winkel 7, aus Metall, also Metallprofile mit L-förmigem Querschnitt, die als Längsabstützungen dienen. Das Befestigen der Winkel 7 aus Metall an den Photovoltaik-Modulen 3 kann beispielsweise durch Kleben (Klebeschicht 9) oder Ähnliches erfolgen.

Des Weiteren umfasst die erfindungsgemäße Anordnung 1 als Unterkonstruktion 11 längslaufende Rinnen mit einem Steg 13 und zwei zu den Photovoltaik-Modulen 3 hinweisenden Schenkeln 15, so dass die Rinnen nach oben, also nach der von einem Gebäude abgekehrten Seite (zur Dachaußenseite) hin, offen sind.

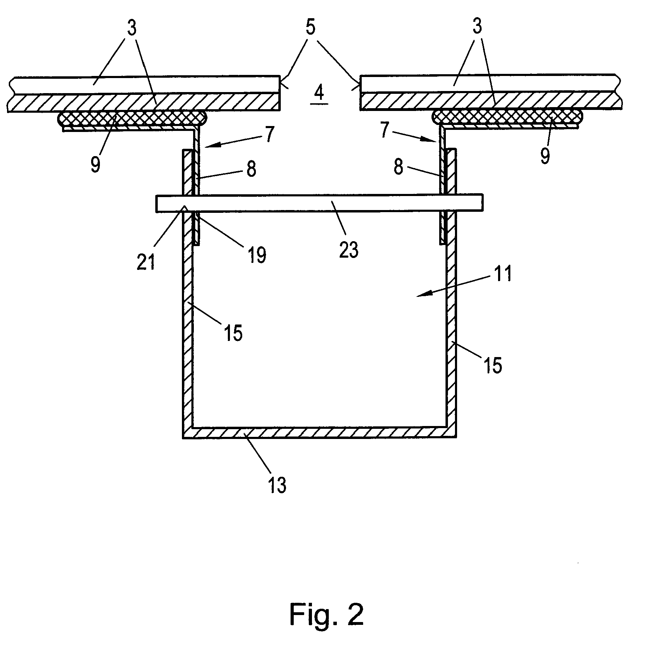

Die Schenkel 15 der Rinnen können zu dem Steg 13 der Rinnen, wie in Fig. 2 gezeigt, senkrecht stehen. Es ist im Rahmen der Erfindung auch in Betracht gezogen, dass die Schenkel 15 zum Steg 13 schräg gestellt sind. Dabei ist insbesondere in Betracht gezogen, dass die Schenkel 15 mit dem Steg 13 spitze Winkel einschließen. Bevorzugt ist dabei, dass sich der Abstand der Schenkel 15 voneinander vom Steg 13 weg vergrößert.

Unabhängig davon, ob die Schenkel 15 zum Steg 13 senkrecht oder schräg stehen, können die Schenkel 15 anstatt, wie in Fig. 2 gezeigt, glatt auch profiliert sein. Dabei ist insbesondere in Betracht gezogen, dass die Schenkel 15 diese versteifenden Wellungen, die in Längsrichtung der Schenkel 15 verlaufend angeordnet sind, aufweisen.

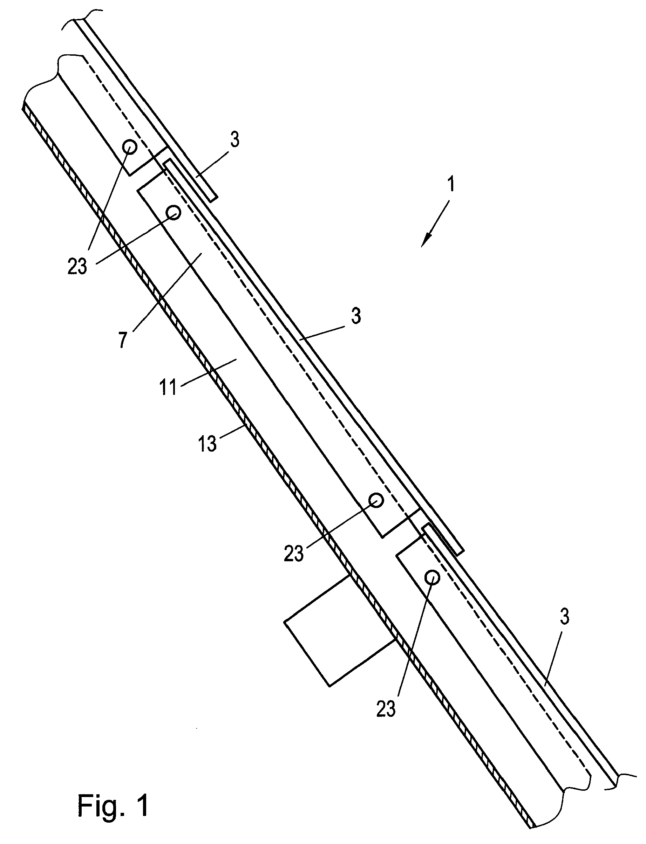

Die Unterkonstruktion 11 in Form von Rinnen sind an einer Dachunterkonstruktion 17, die in Fig. 1 nur schematisch angedeutet ist, befestigt.

Die Photovoltaik-Module 3 werden an der Unterkonstruktion 11, insbesondere den Schenkeln 15 der Rinnen, mit Hilfe der als Längsaussteifungen dienenden Winkel 7 befestigt, wobei die von den Photovoltaik-Modulen 3 normal abstehenden Schenkel 8 der Winkel 7 mit den Schenkeln 15 der Rinnen gekuppelt werden. Hiezu können Kupplungsstangen 23, Stäbe oder Stifte verwendet werden, die durch einander fluchtende Öffnungen 19, 21 in den Schenkeln 8 der Winkel 7 und den Schenkeln 15 der Rinnen greifen.

Bevorzugt ist dabei, dass die Verbindung leicht lösbar ist, so dass das Austauschen einzelner Photovoltaik-Module 3 ebenso vereinfacht ist, wie das Zusammenbauen der erfindungsgemäßen Anordnung.

Wie in Fig. 1 ersichtlich, überlappen benachbarte Photovoltaik-Module 3 im Bereich ihrer (horizontalen) Querenden. Zwischen nebeneinander angeordneten, sich von oben nach unten erstreckenden Reihen von Photovoltaik-Modulen 3 sind gegebenenfalls, zumindest zwischen ausgewählten Reihen zwischen Rändern 5 der Photovoltaik-Module 3 Spalten 4 (Freiräume) vorgesehen, so dass die Rinnen der Unterkonstruktion 11 zum Ableiten von Niederschlag-Wasser dienen können.

Zusammenfassend kann ein Ausführungsbeispiel der Erfindung wie folgt beschrieben werden:
Photovoltaik-Module 3 werden im Dachbereich von Gebäuden nach Art von Schindeln, d.h. mit einander überlappenden, horizontalen Rändern, angeordnet. Mit den Photovoltaik-Modulen 3 sind diese in Längsrichtung über aussteifende Metallwinkel 7 verbunden. Über diese Metallwinkel 7 werden die Photovoltaik-Module 3 an U-Profilen einer Unterkonstruktion 11 befestigt, die ihrerseits an einer Dachunterkonstruktion abgestützt sind. Im Bereich der U-Profile ist zwischen nebeneinanderliegenden Reihen von Photovoltaik-Modulen 3 ein Schlitz 4 vorgesehen, der Zugang in den Innenraum der U-Profile der Unterkonstruktion 11 erlaubt, so dass diese als Dachrinnen zum Ableiten von Niederschlag dienen können.

## Patentansprüche

1. Anordnung von Photovoltaik-Modulen (3) im Dachbereich von Gebäuden, wobei an Längsrändern der Photovoltaik-Module (3) Aussteifungen (7) vorgesehen sind, und die Photovoltaik-Module (3) über diese Aussteifungen (7) an einer Unterkonstruktion (11) befestigt sind, wobei die Unterkonstruktion (11) ihrerseits an einer Dachunterkonstruktion abgestützt ist, die Aussteifungen (7) der Photovoltaik-Module (3) Metallprofile mit L-förmigem Querschnitt sind, die über einen Schenkel an der in Gebrauchslage unteren Seite der Photovoltaik-Module (3) befestigt sind, unmittelbar eine Dacheindeckung bildende, einander dachschindelartig überlappende Photovolatik-Module (3) in mehrere Reihen, die sich im Dach von oben nach unten erstrecken, angeordnet sind, zwischen Längsrändern von Reihen von Photovoltaik-Modulen (3) Freiräume (4) vorgesehen sind und die Unterkonstruktion (11) rinnenförmige U-Profile zum Ableiten von Niederschlags- oder Schmelzwasser umfasst, die in Richtung auf den Freiraum (4) zwischen Photovoltaik-Modulen (3) hin offen sind.

2. Anordnung nach Anspruch 1, **dadurch gekennzeichnet, dass** die Photovoltaik-Module (3) über zu ihnen senkrecht stehende Schenkel (8) der Aussteifungen (7) an der Unterkonstruktion (11) befestigt sind.

3. Anordnung nach Anspruch 1 oder 2, **dadurch gekennzeichnet, dass** die Photovoltaik-Module (3) an den mit ihren in Gebrauchslage horizontalen Rändern überlappend angeordnet sind.

4. Anordnung nach Anspruch 1, **dadurch gekennzeichnet, dass** Photovoltaik-Module (3) über ihre Aussteifungen (7) an zu der Ebene der Photovoltaik-Module (3) senkrecht stehenden Schenkeln (15) der U-Profile der Unterkonstruktion (11) befestigt sind.

5. Anordnung nach einem der Ansprüche 1 bis 4, **dadurch gekennzeichnet, dass** die Befestigung der Photovoltaik-Module an der Unterkonstruktion lösbar ist.

6. Anordnung nach Anspruch 5, **dadurch gekennzeichnet, dass** die Befestigung durch in einander fluchtende Löcher (21, 19) in der Unterkonstruktion (11) und der Aussteifung (7) gesteckte Stäbe (23) erfolgt.

## Claims

1. Arrangement of photovoltaic modules (3) in the roof area of buildings, wherein stiffeners (7) are provided on the longitudinal edges of the photovoltaic modules (3), and the photovoltaic modules (3) are attached by means of these stiffeners (7) onto a substructure (11), wherein the substructure (11) for its part is supported on a roof substructure, the stiffeners (7) of the photovoltaic modules (3) are metal profiles with an L-shaped cross-section, which are attached via one arm onto what is the lower face of the photovoltaic modules (3) when in the position of use, photovoltaic modules (3), directly forming a roof covering, overlapping one another in the manner of roofing shingles, are arranged in a plurality of rows, which extend in the roof from top to bottom, open spaces (4) are provided between longitudinal edges of rows of photovoltaic modules (3), and the substructure (11) comprises gutter-shaped U-profiles for purposes of removing rainwater or melt water, which are open in the direction towards the open space (4) between photovoltaic modules (3).

2. Arrangement in accordance with claim 1, **characterised in that**, the photovoltaic modules (3) are attached onto the substructure (11) by means of arms (8) of the stiffeners (7) that are standing at right angles to the photovoltaic modules (3).

3. Arrangement in accordance with claim 1 or 2, **characterised in that**, the photovoltaic modules (3) are arranged with their edges that are horizontal in the position of use overlapping.

4. The arrangement in accordance with claim 1, **characterised in that**, photovoltaic modules (3) are attached by means of their stiffeners (7) onto arms (15) of the U-profiles of the substructure (11) that are standing at right angles to the plane of the photovoltaic modules (3).

5. Arrangement in accordance with one of the claims 1 to 4, **characterised in that**, the attachment of the photovoltaic modules onto the substructure is detachable.

6. Arrangement in accordance with claim 5, **characterised in that**, the attachment takes place by means of bars (23) that are pushed through holes (21, 19) aligned with one another in the substructure (11) and the stiffener (7).

## Revendications

1. Agencement de modules photovoltaïques (3) dans une zone de toiture de bâtiments, des renforts (7) étant prévus sur les bords longitudinaux des modules photovoltaïques (3) et les modules photovoltaïques (3) étant fixés par le biais de ces renforts (7) sur une substructure (11), la substructure (11) étant de son côté supportée sur une substructure de toit, les renforts (7) des modules photovoltaïques (3) étant des profilés métalliques à section en forme de L, qui sont fixés en position d'utilisation par une branche au côté inférieure des modules photovoltaïques (3), les modules photovoltaïques (3) étant disposés se chevauchant les uns les autres en forme de bardeaux en formant directement une couverture de toit en plusieurs rangées, qui s'étendent dans le toit du haut vers le bas, des espaces libres (4) étant prévus entre les bords longitudinaux des rangées de modules photovoltaïques (3) et la substructure (11) comprenant des profilés en U en forme de gouttière pour permettre l'évacuation des eaux de précipitations et de fonte des neiges, qui sont ouverts en direction de l'espace libre (4) entre les modules photovoltaïques (3).

2. Agencement selon la revendication 1, **caractérisé en ce que** les modules photovoltaïques (3) sont fixés à la substructure (11) par le biais des branches (8) des renforts (7), qui leur sont perpendiculaires.

3. Agencement selon la revendication 1 ou 2, **caractérisé en ce que** les modules photovoltaïques (3) sont disposés se chevauchant avec leurs bords horizontaux en position d'utilisation.

4. Agencement selon la revendication 1, **caractérisé en ce que** les modules photovoltaïques (3) sont fixés par le biais de leurs renforts (7) aux branches (15) des profilés en U de la substructure (11), situés perpendiculaires au plan des modules photovoltaïques (3).

5. Agencement selon l'une quelconque des revendications 1 à 4, **caractérisé en ce que** la fixation des modules photovoltaïques est amovible sur la substructure.

6. Agencement selon la revendication 5, **caractérisé en ce que** la fixation a lieu par des tiges (23) enfilées dans des trous alignés les uns par rapport aux autres (21, 19) dans la substructure (11) et le renfort (7).
